# EUROPEAN PATENT APPLICATION

(11) **EP 1 516 833 A1**
(43) Date of publication of application: **23.03.2005**
(21) Application number: 03021263.3
(22) Date of filing: 19.09.2003
(51) Int. Cl.: B65G 23/12, B65G 23/38, B65G 47/76

(54) **Conveyor device and method for transporting and/or sorting, especially food**

(71) Applicant: CFS Palazzolo S.p.A., 25036 Palazzolo (BS) (IT)
(72) Inventor: Salvoni, Paolo, Corte Franca (BS) (IT)
(74) Representative: Wolff, Felix, Dr.

(57) **Abstract**

The present invention relates to a conveyor device (1), particularly for transporting and/or sorting food or other transport goods, comprising a first part (2) and a second part (3), the first part (2) comprising a first conveying means (20) and the second part (3) comprising a second conveying means (30), the conveying means (20,30) being arranged at least partially in parallel, the conveyor device (1) further comprising a driving means, whereas the first part (2) comprises tensing means (23,24), the tensing means being provided such that the first conveying means (20) is driven while being tensed and the tensing means (23,24) being further provided such that the first conveying means (20) is not driven while not being tensed.

## Description

The present invention relates to a conveyor device and a method for transporting and/or sorting.

It is known to transport goods, especially foodstuff, to and from different working stations by means of endless conveyors of the belt-type or of the string-type. Typically, a supplying station provides the goods to be transported to a receiving station where at the receiving station a further processing step is applied to the goods.

GB 896,425 discloses an apparatus delivering articles from a source of supply to a receiver whereas the apparatus comprises an endless conveying member from which articles are diverted onto another conveying member. The conveying members at least partially act as storage means to store temporarily articles and thereby adapt the supply capacity of the source to the receiving capacity of the receiver.

The known apparatus is comparably complex and bulky, and therefore it requires considerable investments in terms of space and in terms of costs. Furthermore, the known apparatus works in an inflexible manner as it can not interact reliably with more than one supply source of articles when these supply sources provide the articles in a non-continuous manner.

It was therefore the problem of the present invention to provide a conveyor device and a method for transporting and/or sorting that overcomes the above mentioned disadvantages.

The problem is solved with a conveyor device, particularly for transporting and/or sorting food or other transport goods, comprising a first part and a second part, the first part comprising a first conveying means and the second part comprising a second conveying means, the conveying means being arranged at least partially in parallel, the conveyor device further comprising a driving means, wherein the first part comprises tensing means, the tensing means being provided such that the first conveying means is driven while being tensed and the tensing means being provided such that the first conveying means is not driven while not being tensed.

It was totally surprising and could not have been expected by a person skilled in the art that the a.m. conveyor device is constructed in a very small, robust and simple way and nevertheless allows to transport and/or to sort food or other transport goods in an extremely flexible and versatile manner. According to the invention, the first conveying means can be driven and can be stopped very easily and very rapidly only by tensing the first conveying means. Therefore, the conveyor device has a high throughput and more than one sources of supply can be connected to the device and be handled in a very flexible manner.

Preferably, at least the first or the second conveying means is provided as a conveyor belt. This is advantageous as the items or articles can be placed on a comparatively large surface without being damaged, e.g. through a contact with other parts of the device. Furthermore, the passing over of the articles or items from one of the conveying means to the other can be facilitated. In an alternative embodiment of the invention, it is obviously also possible to provide the conveying means as an endless string or, preferably, a multitude of endless and adjacent strings being moved in a common manner.

In a preferred embodiment of the present invention, the tensing means comprise at least an actuator, especially a linear actuator and preferably a pneumatic actuator. A linear actuator allows to provide the tensing means relatively easily and therefore render the device simple, compact and cost effective. Especially, a pneumatically driven actuator is provided, but other kinds of actuators, e.g. electrical, mechanical, magnetic, thermal or being based on other principles, are also possible.

Preferably, the first part of the device comprise a guiding means. This allows to transfer the transported items or articles from one of the conveyor means, especially the first conveyor means, to another conveyor means, especially the second conveyor means. Still further preferred is an embodiment of the invention with guiding means that traverses the first conveying means almost completely. Such a guiding means is advantageous because it is simple and cost effective and provides a complete transfer of the transported articles or items in a very reliable manner.

Preferably, the conveyor device comprises stop means. This allows the device to securely stop the first conveying means in the case where it is not tensed and even though the drive means are driving the second conveying means.

In a preferred embodiment of the present invention, the conveyor device comprises first guide rollers, second guide rollers, third guide rollers and fourth guide rollers whereas the first part of the device comprises the first and the second guide rollers and whereas the second part of the device comprises the third and the fourth guide rollers and whereas at least either the first and third guide rollers or the second and fourth guide rollers rotate about a common axis. By providing a common axis for two of the guide rollers, the device can be built in a very compact manner and very cost effectively.

Preferably, the driving means commonly drive at least either the first and third guide rollers or the second and fourth guide rollers. By this provision, common driving means drive both conveyor means and therefore, the device can be built lightweight, cost effective and compactly.

In an especially preferred embodiment, the device transports the goods or the articles to or from a tray-sealer. In this embodiment, the device is especially part of a packaging machine ensemble with different working stations, one of which is a tray-sealing machine. Such tray-sealing machines normally have a high throughput and therefore can handle the combined output of a plurality of other working stations, e.g. filling stations. The device according to the invention allows therefore to combine the multitude of flows of articles supplied by, e.g., filling stations and to convey the articles or goods to the tray-sealing station.

Another subject matter of the present invention is a method for transporting and/or sorting, especially food or other transport goods, wherein a conveyor device comprises a first part and a second part, a driving means and tensing means whereas transported goods are transferred from the first part to the second part by means of guiding means when the tensing means are activated.

According to the invention, the first conveying means can be driven and stopped very easily and very rapidly and the items or articles can be moved or transferred from the first conveying means to the second very rapidly and reliably. Therefore, the forces applied to the goods when transferred from one conveying means to the other are rather small and the articles or goods are not damaged.

The conveyor device of the invention will be described in greater detail hereinafter in connection with the drawings which illustrate exemplary embodiments.
- **Figure 1**: shows schematically a perspective view on a first part and a second part of a device according to the invention.
- **Figure 2**: shows schematically a side view of the device according to the invention.
- **Figure 3**: shows schematically a side view of an alternative embodiment of the device according to the invention.
- **Figure 4**: shows schematically a top view of the device according to the invention.

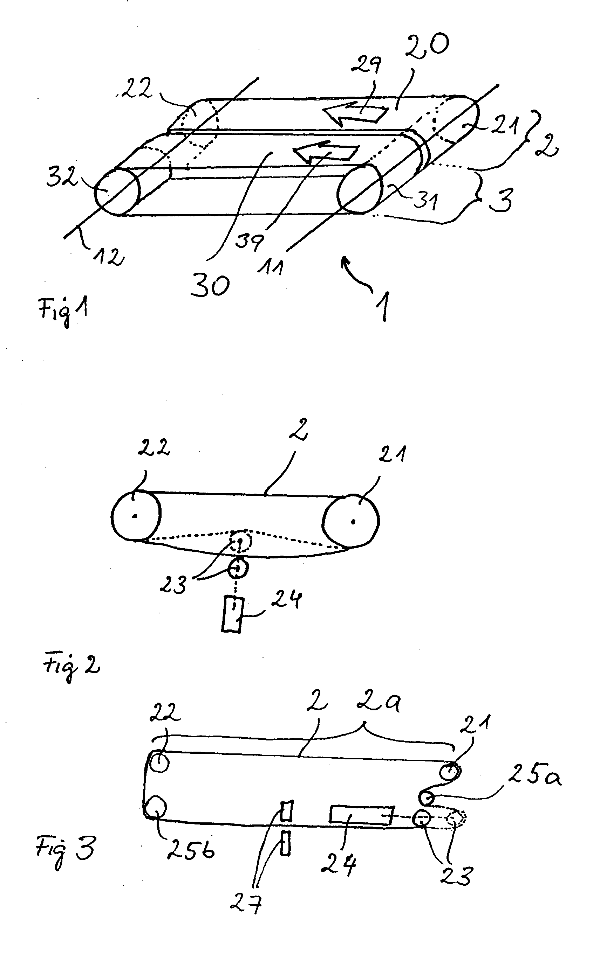

In **Figur 1,** a perspective view on a first part 2 and a second part 3 of a conveyor device 1 according to the invention is schematically shown. Both parts 2, 3 comprise conveying means, i.e. the first part 2 comprises a first conveying means 20 and the second part 3 comprises a second conveying means 30. The conveying means 20, 30 shown in Figure 1 are both of the belt-type, but other embodiments of the conveying means 20, 30 are possible, especially conveying means 20, 30 of the "string-type". By arrows 29, 39, the direction of movement of the conveying means 20, 30 is denoted: both conveying means 20, 30 (when driven) are transporting goods or articles or items in the same direction. The conveying means 20, 30 (i.e. the first and second parts 2, 3 of the device 1) are depicted as being arranged parallel and adjacent along their complete length. The first conveying means 20 extend between a first guide roller 21 and a second guide roller 22 and the second conveying means 30 extend between a third guide roller 31 and a fourth guide roller 32. Thereby, the first and third guide rollers 21, 31 are provided rotatable about a first axis 11 and the second and fourth guide rollers 22, 32 are provided rotatable about a second axis 12. According to the invention, at least one of the common axes 11, 12 are driven by a common driving means, especially an electrical driving means. Other driving means, such as mechanical, thermal, magnetic or being based on other principles, are also possible according to the invention. The driving means are not depicted in the figures.

However, it is possible to provide the first and second parts 2, 3 such that they have different length and that they are arranged only partly adjacent (but still being parallel to each other). Furthermore, it is possible to provide only two of the rollers 21, 22, 31, 32 rotatable about a common axis 11, 12. Furthermore, it is also possible to provide two or more driving means to drive the rollers and therefore the conveying means 20, 30.

In **Figure 2**, a side view of the conveyor device 1 according to the invention is schematically shown. The first and second guide rollers 21, 22 of the first part 2 (or of the first conveying means 20) are provided such that the conveying means 20 are not tensed. According to the invention, a tensing means, comprising an actuator 24 and a tensing device 23, is arranged such that by an activation of the actuator from a "stop"-position (represented in **Figure 2** by a continuous line) towards a "drive"-position (represented in **Figure 2** by a dashed line), the first conveying means 20 is tensed such that enough friction is applied between the first conveying means 20 and the guide roller(s) 21, 22 driven by the driving means. The tensing device 23 thereby transmits a sufficient force to the conveying means 20 in order to maintain enough friction in the conveying means 20. This force is generally generated and maintained by the actuator 24. Preferably, the tensing device 23 comprises a roller which is driven by the conveying means 20 while in its "drive"-position. According to the invention, different geometric arrangements of the tensing means 23, 24 relative to the first conveying means 20 are also possible, an example of which is depicted in **Figure 3**.

In **Figure 3**, a side view of an alternative embodiment of the conveyor device 1 according to the invention is schematically shown. In the alternative embodiment of the device 1, the tensing means 23, 24 are arranged differently, thereby providing another geometric arrangement of the tensing means 23, 24 relative to the first conveying means 20. The force applied by the actuator 24 is directed in a direction almost parallel to the useful surface 2a of the first part 2. Again the "drive"-position of the actuator 24 is represented by a dashed line and the "stop"-position is represented by a continuous line. Furthermore, the alternative embodiment of the device 1 comprises a first auxiliary roller 25a and a second auxiliary roller 25b cooperating with the first and second guide rollers 21, 22.

In a preferred embodiment of the invention, the device 1 comprises stop means 27 that prevent the first conveying means 20 from moving in a situation where the tensing means 23, 24 are in their "stop"-position. For example, the stop means 27 are provided as jaws approaching one another in order to stop the first conveying means 20 and departing from one another in order to release the first conveying means 20 (so that the tensing means 23, 24 are allowed to take their "drive"-position).

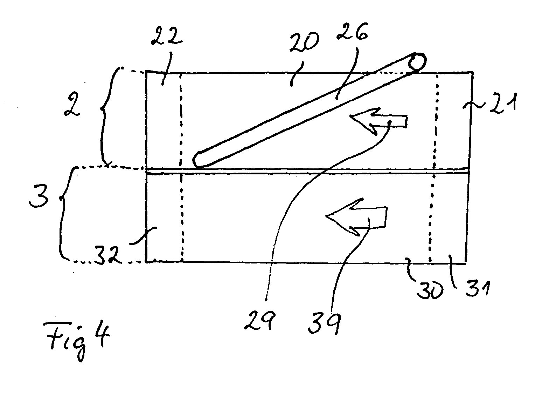

In **Figure 4**, a top view of the device 1 according to the invention is schematically shown. Again, the first part 2 and the second part 3 of the device 1 are shown arranged parallel and adjacent to one another. Furthermore, the guide rollers 21, 22, 31, 32 and the directions 29, 39 of flow of the first and second conveying means 20, 30 are denoted in **Figure 4**. Besides, a guiding means 26 is shown which is arranged on the top of the useful surface of the first conveying means 20. The guiding means 26 traverses the first conveying means 20 almost completely. The guiding means 26 is provided at a height above the first conveying means 20 in order to "push" transported items or articles (not shown) from the first conveying means 20 towards the second conveying means 30. Relatively to the (moving) first conveying means 20, the articles move along the guiding means 26 in a direction perpendicular to the direction of transport 29 of the first conveying means 20. The guiding means 26 can be realised as a straight bar traversing the first conveying means almost completely. Thereby, the guiding means 26, according to the invention, is provided as an easy to handle and easy to manufacture system. For example, the guiding means 26 can be provided pivotably mounted and the angle (not shown) that the guiding means 26 forms with the direction of transport 29 of the first conveying means 20 can therefore be provided variable. To pivot the guiding means 26, an actuator (not shown) can be provided. By this, an easy system of transfer of articles from one of the conveying means to the other of the conveying means is possible.

According to alternative embodiments (not shown) of the invention, further tensing means (not shown) could be provided at the second part 3 in order to tense or not to tense the second conveying means 30 thereby inducing the second conveying means 30 either to be driven or not, just in the same manner a with the first conveying means 20 and the tensing means 23, 24.

### Reference numbers

- 1: device
- 2: first part
- 2a: useful surface of the first part
- 3: second part
- 11: first axis
- 12: second axis
- 20: first conveying means
- 21: first guide roller
- 22: second guide roller
- 23, 24: tensing means
- 25a: first auxiliary roller
- 25b: second auxiliary roller
- 26: guiding means
- 27: stop means
- 29: direction of movement of the first conveying means
- 30: second conveying means
- 31: third guide roller
- 32: fourth guide roller
- 39: direction of movement of the first conveying means

## Claims

1. Conveyor device (1), particularly for transporting and/or sorting food or other transport goods, comprising a first part (2) and a second part (3), the first part (2) comprising a first conveying means (20) and the second part (3) comprising a second conveying means (30), the conveying means (20, 30) being arranged at least partially in parallel, the conveyor device (1) further comprising a driving means, **characterised in that** the first part (2) comprises tensing means (23, 24), the tensing means (23, 24) being provided such that the first conveying means (20) is driven while being tensed and the tensing means (23, 24) being further provided such that the first conveying means (20) is not driven while not being tensed.

2. Conveyor device (1) according to claim 1, **characterised in that** at least the first or the second conveying means (20, 30) is provided as a conveyor belt.

3. Conveyor device (1) according to any of the preceding claims, **characterised in that** the first tensing means (23, 24) comprise at least an actuator (24), especially a linear actuator and preferably a pneumatic actuator.

4. Conveyor device (1) according to any of the preceding claims, **characterised in that** at least the first part (2) comprises a guiding means (26).

5. Conveyor device (1) according to any of the preceding claims, **characterised in that** the guiding means (26) traverses the first conveying means (20) almost completely.

6. Conveyor device (1) according to any of the preceding claims, **characterised in that** the conveyor device (1) comprises stop means (27).

7. Conveyor device (1) according to any of the preceding claims, **characterised in that** the conveyor device (1) comprises first, second, third and fourth guide rollers (21, 22, 31, 32) whereas the first part (2) comprises the first and the second guide rollers (21, 22) and whereas the second part (3) comprises the third and the fourth guide rollers (31, 32) and whereas at least the first and the third guide rollers (21, 31) or the second and the fourth guide rollers (22, 32) rotate about a common axis (11, 12).

8. Conveyor device (1) according to any of the preceding claims, **characterised in that** the driving means commonly drive at least either the first and the third guide rollers (21, 31) or the second and the fourth guide rollers (22, 32).

9. Method for transporting and/or sorting, especially food or other transport goods, **characterised in that** a conveyor device (1) comprises a first part (2) and a second part (3), a driving means and tensing means (23, 24) whereas transported goods are transferred from the first part (2) to the second part (3) by means of guiding means (26) when the tensing means (23, 24) are activated.
